(19) Europäisches Patentamt
European Patent Office
Office européen des brevets

(11) EP 3 184 364 B1

(12) EUROPEAN PATENT SPECIFICATION

(45) Date of publication and mention
of the grant of the patent:
**19.09.2018 Bulletin 2018/38**

(51) Int Cl.:
*B60R 1/00* (2006.01)

(21) Application number: **15202118.4**

(22) Date of filing: **22.12.2015**

(54) **REAR VIEW DEVICE FOR A VEHICLE**

RÜCKSPIEGELVORRICHTUNG FÜR EIN FAHRZEUG

DISPOSITIF DE VISION ARRIÈRE POUR UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.06.2017 Bulletin 2017/26**

(73) Proprietor: **Panasonic Automotive & Industrial
Systems
Europe GmbH
63225 Langen (DE)**

(72) Inventors:
• **HAIDAR, Hassan
63225 Langen (DE)**
• **CALVI, Giorgio
63225 Langen (DE)**
• **RELLEN, Jenes
63225 Langen (DE)**

(74) Representative: **Grünecker Patent- und
Rechtsanwälte
PartG mbB
Leopoldstraße 4
80802 München (DE)**

(56) References cited:
**WO-A1-2014/130049      DE-A1-102012 223 479
GB-A- 2 417 847**

## Description

## FIELD OF THE INVENTION

The present invention relates to a rear view device for a vehicle. More specifically, the present invention relates to a rear view device wherein a conventional rear view mirror of the vehicle is replaced by a display for displaying thereon a camera image captured by a camera mounted to a rear portion of the vehicle.

## BACKGROUND ART

Conventionally, vehicles are provided with rear view mirrors for enabling a driver to observe the traffic situation behind his or her own vehicle. Although the images provided by conventional optical rear view mirrors have been considered acceptable for a long period of time, such mirrors are not without their drawbacks. For instance, the field of view of the rear view mirror arranged at or close to the windshield of the vehicle is limited by passengers or other obstacles within the vehicle. Further, the visibility of an optical mirror image is limited under conditions of darkness outside, in particular, when there are bright headlights of vehicles following behind.

In order to address such drawbacks, a rear view device for a vehicle has been developed, wherein the optical rear view mirror is replaced by a display (in particular: an LCD (liquid crystal display) screen) arranged in place of the conventional mirror and a rear view camera arranged on a rear portion of the vehicle so as to capture an image of the situation outside behind the vehicle. Said image is then projected onto the screen of the display. A first example of such a rear view device has been introduced by Nissan as Smart Rear Mirror.

In addition, it is possible to provide the display so as to be integrated in a conventional mirror. In this case, a driver can switch between the conventional mirror view and the view provided by the camera, as desired.

DE 10 2012 223479 A1 discloses a rear view device for a vehicle, the rear view device comprising a display for displaying an image captured by a camera mounted at a rear position of the vehicle, the display being arranged so as to be mounted in the field of view of a driver of the vehicle and so that a spatial orientation of the display relative to a body of the vehicle is adjustable in at least one dimension, a sensor for detecting an angular movement of the display relative to the vehicle and a controller for setting a camera field of view of an image to be displayed on said display captured by said camera, in accordance with the determined orientation of the display. Also, a rear view (rear monitoring) device according to the state-of-the-art is described in Japanese laid open patent application JP 2009-100180 A.

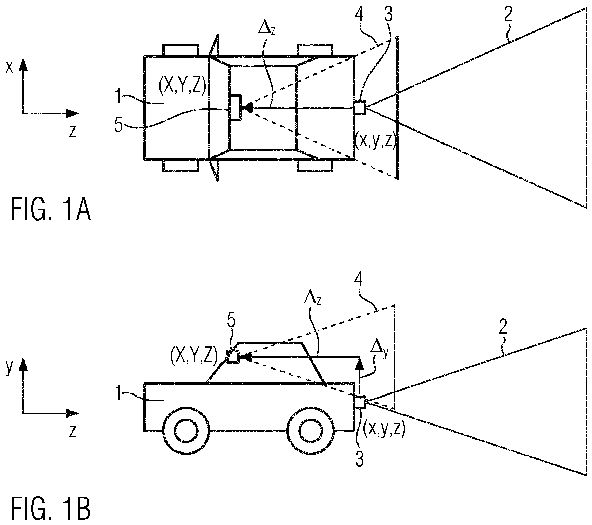

A principle of operation of such a rear view device is shown in Fig. 1. Fig. 1A illustrates a top view, and Fig. 1B illustrates a side view of a vehicle 1 equipped with such a rear view device.

A display 5 is arranged near a front windshield of the vehicle 1, and a camera 3 is arranged on a rear side of the vehicle. A controller in the vehicle 1 is adapted to perform co-ordinate transformation between a coordinate position (x, y, z) of the rear camera 3 and the coordinate position (X, Y, Z) of the display 5, in accordance with

$$X = x$$

$$Y = y + \Delta y$$

$$Z = z + \Delta z$$

By performing said co-coordinate transformation, an image captured by the rear camera 3 having field of view 2 is converted into an image ("pseudo picture") as would be seen by the driver sitting on his or her seat on a conventional mirror and displayed on the display 5. The driver can thus see the same rear image corresponding to the field of view 4 as he or she would see on the conventional mirror arranged in place of the display 5, with the exception of the objects inside the vehicle (obstacles) seen in the conventional mirror.

Thereby, any uncomfortable or unusual feeling as a result of the driver watching the display is avoided. Also, there will not be any abrupt changes in the displayed image when switching between the integrated display and the conventional mirror, as indicated above.

The initially developed camera-based rear view systems have been arranged so that the position and orientation of the image coming from the rear camera 3 and displayed on the display 5 remains fixed, i.e. is not adjustable.

On the other hand, it is possible to adjust the view of a conventional car mirror by manually moving the mirror itself, for example to see the right rear side of the car when going back. More specifically: the orientation of the mirror is adjusted by rotating the mirror around at least one axis. In the simplest case, this can be an axis extending approximately vertically with respect to the inside of the vehicle, i.e. approximately along the y-axis of Fig. 1. In more sophisticated arrangements, a mirror can be pivoted to a certain extent around more than one virtual axis, for instance by means of a ball-and-socket joint.

Since the rear camera of said initially developed rear monitoring systems has a fixed non-adjustable view, the image displayed on the display also always remains the same and cannot be adjusted by moving the display replacing the mirror, as the driver used to do with conventional mirrors. Such a problem is particularly evident when the display is integrated with a conventional mirror so that the image displayed by the conventional mirror changes when adjusting the orientation of the mirror, while the display provided from the rear view camera remains fixed.

It is therefore desirable to change (adjust) the view provided by the rear view camera in accordance with an adjustment of the display, in particular the orientation of the display.

A solution to such a problem is known from JP 2009-100180 A. According to an embodiment described therein, a movement detector for detecting an angle of movement of the display is provided so as to determine changes in the orientation of the mirror. Said movement detector operates on the basis of a potentiometer that detects an angle of movement (change of orientation) of the display, such as by a manual operation of the driver. The potentiometer is adapted to determine an angular movement of the display in a similar manner as the movement of a conventional joystick is determined. For detecting the movement in more than one dimension (degree of freedom), a plurality of potentiometers may be provided. In accordance with the detected movement, the field of view of the rear camera is changed to adjust the image to be displayed. For instance, this can be done by providing the rear camera with at least one motor for adjusting the image capturing direction of the camera.

Such a solution does, however, have the drawback that the movement detection by means of the potentiometer is not very precise and not very reliable. In particular, the potentiometer may be influenced not only by the desired adjustment movements performed by the driver to change the orientation of the display replacing the mirror, but also by other movements of the vehicle, such as vibrations caused by poor road conditions. Although it is possible, in principle, to filter out such a kind of movements, for instance, by disregarding movements detected by the potentiometer that have a size below a certain threshold, this has the further drawback that small movements of the display (fine adjustment) cannot be properly detected, because they are generally filtered out and disregarded.

## SUMMARY OF THE INVENTION

The present invention aims to overcome the above drawbacks and to provide improved rear view equipment for a vehicle, which is capable of providing a more reliable and more precise adjustment of the displayed image from a rear camera, in accordance with an adjustment of the position (orientation) of the display.

This is achieved by the features of the independent claims.

According to a first aspect of the present invention, a rear view device for a vehicle is provided. The rear view device comprises a display for displaying an image captured by a camera mounted at a rear position of the vehicle. The display is arranged so as to be mounted in the field of view of the driver of the vehicle and so that a spatial orientation of the display relative to the body of the vehicle is adjustable in at least one dimension. The rear view device further comprises a first sensor to be mounted fixed relative to the body of the vehicle, for detecting a movement of the vehicle and a second sensor to be mounted fixed relative to the display for detecting the movement of the display together with the vehicle. The rear view device further comprises a controller for determining the orientation of the display on the basis of an output of the first sensor and an output of the second sensor and for setting a camera field of view of an image to be displayed on the display captured by the camera, in accordance with the determined orientation of the display.

According to a second aspect of the present invention, a method of operating a rear view device for a vehicle is provided. The rear view device comprises a display for displaying an image captured by a camera mounted at a rear position of the vehicle and a controller. The display is mounted in the field of view of a driver of the vehicle. The method comprises the steps of adjusting a spatial orientation of the display relative to a body of the vehicle in at least one dimension, detecting the movement of the vehicle by a first sensor and detecting a movement of the display together with the vehicle by a second sensor. The method further comprises the steps of automatically determining, by the controller, the orientation of the display on the basis of an output of the first sensor and an output of the second sensor, setting, by the controller, a camera field of view of an image to be displayed on the display captured by the camera, in accordance with the determined orientation of the display, and displaying an image captured by the camera and corresponding to the said camera field of view, on the display.

In accordance with a further particular aspect of the present invention, a rear view system for a vehicle is provided. The rear view system comprises a rear view device according to the first aspect of the invention and the camera mounted at the rear position of the vehicle.

In accordance with yet another particular aspect of the present invention, a vehicle comprising a rear view system according to the above further particular aspect is provided.

For better understanding, it is noted that the term "device" as used in this specification is not limited to a situation wherein all components of the "device" form a compact arrangement, such as in a housing. Rather, a "device" means a facility or "equipment" comprising a plurality of components that may be spatially distributed so as to cooperate for performing a predetermined functionality.

It is the particular approach of the present invention to provide a camera-based rear view system for a vehicle, wherein a field of view of an image displayed on a display replacing a conventional rear view mirror is adjusted in synchronization with a movement of the display for changing the orientation thereof. The adjustment is based on the output of two sensors, such as motion or inertial sensors, which are arranged to detect the motion of the vehicle and the motion of the display together with the vehicle, respectively. Thereby, after employing a respective filtering logic, a precise determination of the adjustment motion of the display forming a basis for the synchronized adjustment of the displayed image is possible.

Preferably, the display is arranged in place of a conventional rear view mirror of the vehicle. In particular, this may be in place of the central rear view mirror of the vehicle that is conventionally arranged close to a central upper portion of the windscreen of the vehicle. For instance, the display can be arranged in a frame normally foreseen for a conventional optical mirror. Also, a display of a rear view device according to the present invention may be used in place of an outside rear view mirror of a vehicle.

Further preferably, the camera field of view is set by the controller so as to correspond to the field of view that the driver of the vehicle sees in a conventional mirror mounted in place of the display, if it is assumed that the conventional mirror has the same spatial orientation as the display. Consequently, the driver has a natural feeling, as if he is looking to the rear side of the vehicle through a conventional mirror and will not be distracted by any unexpected or unusual manner of display.

Also preferably, the display is integrated in a conventional mirror. The respective arrangement is capable of showing both a conventional image resulting from optical reflection and the camera captured display image. The driver can switch between the camera image view and the conventional mirror image view by activating and de-activating the display. Although the camera captured display image will dominate the conventional mirror image (which cannot be switched off) if the brightness of the display is sufficient, it is particularly relevant in the case of a rear view device integrating a conventional mirror and a display that the camera field of view is adjusted to the conventional mirror view as precisely as possible, in order to minimize any distracting overlay effects.

Preferably, the display is an LCD display (liquid crystal display). Such a display can be easily integrated in the form of a particular layer of a multi-layered device also including a conventional mirror layer.

Preferably, the controller includes a filter arrangement arranged to subtract the sensor signals received from the first and the second sensor from each other, in order to determine the relative movement of the display with respect to the body of the vehicle.

In accordance with a preferred embodiment, the controller sets the camera field of view by instructing a video processor such as a video digital signal processor (video DSP) to crop an image captured by the camera. More preferably, a wide angle camera (also known as a camera with a "fisheye" lens) capable of capturing an image of a wide area on the rear side of the vehicle is used. By cropping a part of the captured image in accordance with the adjustment of the display, preferably so as to correspond to the portion that would be seen by the driver in a conventional mirror in place of the display, the desired portion of the complete image captured by the camera can be provided and displayed. For adjusting the field of view by cropping an image, it is a general prerequisite that the resolution of the camera is higher than the resolution of the display. If the resolution of the camera cannot be higher than that of the display, then zooming function can be implemented on camera side which would allow the video processor to crop the desired image window that is proportional to the adjustment of the display.

In accordance with an alternative preferred embodiment, the camera field of view is set by a physical movement of the camera so as to modify the camera orientation. Such a movement is instructed by the controller in accordance with the filtered output of the sensors indicating the display orientation adjustment. In other words, the camera orientation is adjustable so that the camera can capture images corresponding to different fields of view, which are respectively provided to the display device, as desired (i.e. synchronized with the adjustment of the display/mirror).

Preferably, the controller sets the camera field of view on the basis of a pre-stored mapping table mapping the orientation of the display determined based on the sensor outputs on a camera field of view to be set in accordance with the orientation of the display. In other words, the mapping table (which may also be called a "look-up table" (LUT)) provides a mapping between parameters characterizing the orientation of the display and parameters characterizing the camera field of view of the image to be displayed. The orientation of the display can be characterized, for instance, by means of spherical coordinates ($\psi$ - Yaw, $\theta$ - Pitch, $\phi$ - Roll) of a co-ordinate system fixed to a centre of movement of the display (display co-coordinate system). In case of synchronizing the field of view by means of physical adjustment of the camera, respective spherical co-ordinates in a co-coordinate system fixed to a centre of movement of the camera can be used as parameters characterizing the field of view of the camera. In case of synchronizing the field of view by means of cropping a wide-angle image, respective angular parameters characterizing a portion of the wide-angle image to be selected are mapped in the table to respective parameters characterizing the determined display orientation.

Providing a mapping table (LUT) in advance so as to be stored in the rear view device of the vehicle means that the rear view device has to be calibrated once in advance for providing the mapping table. This is done for each type of vehicle, by taking into account the necessary parameters that generally differ from vehicle type to vehicle type. Such parameters include, in particular, the size of the display, the (average) distance between the display (a representative point of the display, depending on the exact construction of the display and the display holder) and the eye area of an (average-sized) driver, the direction between the representative point and the driver's eyes, as well as the distance between the (representative point of the) display and (a representative point of) the camera. After having once been calibrated, the controller of the rear view device of the present invention is capable of performing the necessary adjustment depending on the (filtered) measurement output of the sensors. Since the data stored in a table are generally discrete, the preciseness of the adjustment depends on the amount of data stored in the table, i.e. the step size (increment) of the stored data. Any output measurement result indicating the orientation of the display has to be rounded so as to match a corresponding entry of the mapping table.

Alternatively, instead of providing a mapping table, a functional dependency between a parameter set characterizing the camera field of view and a parameter set characterizing the orientation of the display can be determined and pre-stored in advance. Thereby, the necessary approximation due to the discreteness of entries in the mapping table can be avoided. On the other hand, a calculation of the field of view of the image to be displayed must be performed each time, based on the pre-stored functional dependency when the display is adjusted.

A rear view system according to the present invention preferably further comprises a video DSP for rendering and providing a video signal of an image corresponding to the camera field of view set by the controller to the display for being displayed on the basis of the set camera field of view.

Further features and advantages of the present invention are the subject matter of dependent claims.

## BRIEF DESCRIPTION OF THE DRAWINGS

Additional features and advantages of the present invention will become apparent in the following and more particular description as illustrated in the accompanying drawings, wherein:

Fig. 1 is a general overview of a vehicle with a camera-based rear view system in the framework of which the present invention is applied;

Fig. 2 illustrates an arrangement of a display and of motion or inertial sensors in the front portion of the interior of a vehicle in accordance with embodiments of the present invention;

Fig. 3 is a block diagram illustrating the operation of a rear view device in accordance with embodiments of the present invention;

Fig. 4 shows an example of an uncropped view of an image captured by a rear vehicle camera having a fisheye lens;

Fig. 5 shows an example of a cropped view of a part of the image of Fig. 4 in accordance with a first adjustment position of the display mounted in the front portion of the interior of the vehicle;

Fig. 6 shows an example of a cropped view of a part of the image of Fig. 4 in accordance with a second adjustment position of the display mounted in the front portion of the interior of the vehicle; and

Fig. 7 shows an example of a cropped view of a part of the image of Fig. 4 in accordance with a third adjustment position of the display mounted in the front portion of the interior of the vehicle.

## DETAILED DESCRIPTION

The present invention provides a camera-based rear view system for a vehicle that is based on an improved procedure for detecting an adjustment of a display on which an image captured by a rear view camera of the vehicle is displayed, for synchronizing the adjustment of the display orientation with the displayed image, in a similar manner as the optical mirror image displayed in a conventional mirror adjusts when the mirror orientation is changed.

In accordance with the present invention, the detection of the orientation adjustment is based on using two sets of sensors, such as inertial or motion sensors. The first set of sensors detects the motion of the car (vehicle). The second set of sensors detects the motion of the display together with the car.

Each set of sensors may, in principle, comprise only a single sensor. This is sufficient, for instance, if the display has only a single degree of freedom for adjusting an orientation thereof, such as a rotation around an axis which is substantially vertical in the interior of the vehicle. By using more sophisticated sensors capable of detecting a movement in two or three dimensions, a two-or three-dimensional orientation adjustment can also be detected with a single sensor per set. Alternatively, a set of sensors may comprise two or three sensors, each for detecting a movement corresponding to a single degree of freedom, respectively.

In accordance with the above considerations and for the sake of simplicity, the term "a sensor" as used throughout the present specification may designate both a single sensor as well as a plurality of sensors forming a set of sensors, which together perform the desired functionality in plural dimensions (plural degrees of freedom), as implemented in different embodiments.

By filtering out the motion of the vehicle as a whole from the output of the first and the second sensors/sensor sets, a control means such as a microcontroller can detect an exact positioning and orientation of the display. A further prerequisite is a respective calibration of the sensors. This means that some initial orientation adjustment (frame of reference) of the display is set in advance as a starting point, with respect to which the orientation changes due to a movement initiated by manual adjustment by the driver or another person in the vehicle are measured. Knowing the exact positioning and orientation of the display, a controller adjusts the field of view of the rear camera to match the adjusted orientation.

In accordance with a particular preferred embodiment, this is done by cropping the image coming from the rear camera so as to reduce the whole captured image to the desired portion to be displayed, in accordance with the corresponding field of view of an optical mirror that is replaced by the display. In this case, preferably a camera with a fisheye lens capable of achieving a wide angle of view is used.

A general overview of a vehicle 1 comprising a camera-based rear view system, in particular a system in accordance with the present invention, is illustrated in Fig. 1, which has already been described in the introductory portion of the present specification. In particular, Fig. 1A illustrates a top view of a vehicle with the respective system and Fig. 1B illustrates a side view of the vehicle with the rear view system.

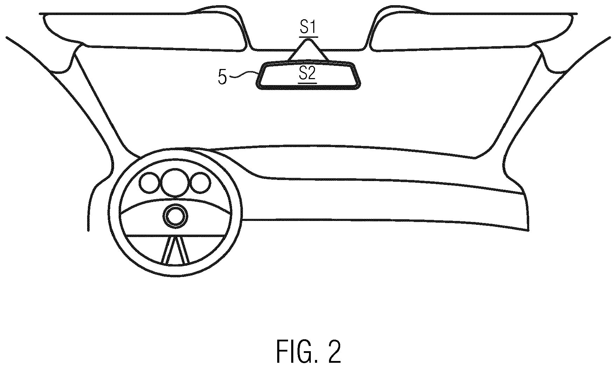

Fig. 2 illustrates the hardware arrangement for the adjustment sensing concept according to the present invention.

Sensor S1 detects the vehicle movement (with respect to a reference frame outside the vehicle, such as the road). For this purpose, sensor S1 is arranged in a position that is fixed with respect to the body of the vehicle so that it does not move when a driver or another user adjusts the orientation of the display. In the illustrated embodiment, sensor S1 is arranged in a mounting of the display, i.e. close to the display itself. However, such an arrangement is shown by way of example only and sensor S1 does not necessarily need to be mounted close to the display.

Sensor S2 detects a superposition of the vehicle movement and the mirror movement. For this purpose, sensor S2 is arranged in a position that is fixed with respect to the display (which is, itself mounted to the vehicle body in an adjustable, i.e. a movable manner).

In the illustrated embodiment, the display 5 is arranged in a conventional mirror frame, instead of the conventional central mirror of the vehicle. As indicated above, the present invention is not limited to such an arrangement, although this is a preferable embodiment.

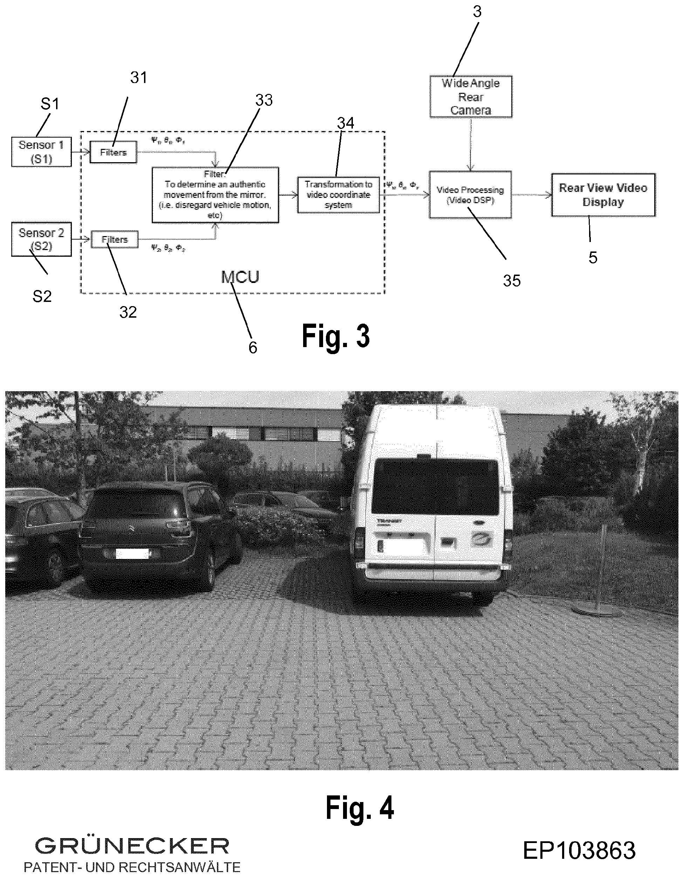

Fig. 3 provides a block diagram for illustrating the overall functionality of the rear view equipment including the rear view device in accordance with the present invention.

The left-hand side of the block diagram shows sensors S1 and S2 for detecting the vehicle movement and the superposition of the vehicle movement and the display movement, respectively.

The output signals of sensors S1 and S2 are input to a controller 6 such as a microcontroller unit (MCU). At first, the sensor outputs are pre-processed by filters 31 and 32, respectively. Filters 31 and 32 are electronic pre-processing filters that are provided for removing parasitic signal components such as noise and other distortions, for providing, as far as possible, a "clean" sensor signal. Filters 31 and 32 may include, for instance, any of Kalman, Extended Kalman, Complimentary, Mahony, Madgwick and Quaternion filters. As indicated along the arrows outgoing from filter boxes 31 and 32, respectively, the clean sensor signals comprise three-dimensional coordinates (in the given example: spherical coordinates $(\psi_1, \theta_1, \phi_1)$ and $(\psi_2, \theta_2, \phi_2)$), respectively.

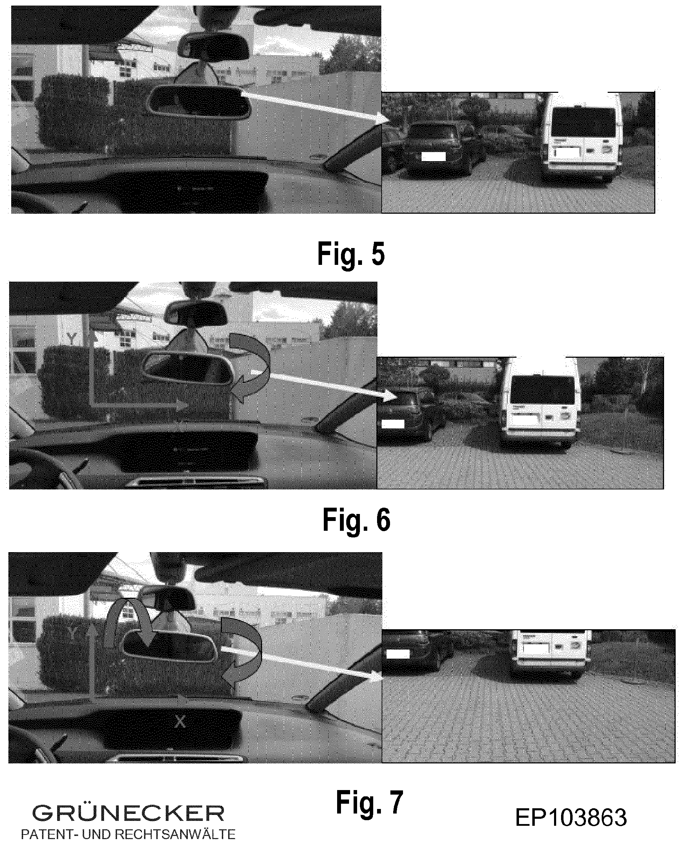

The filtered output signals of sensors S1 and S2, respectively, are input into filter 33. Filter 33 performs a subtraction (S2-S1) of the output signals of the individual sensors S1 and S2. Thereby, an actual movement of the display, with respect to the vehicle body but disregarding the vehicle motion as a whole, is obtained. By relating the determined actual movement of the display back to some predetermined initial orientation (such as the "centered position, cf. Fig. 5), the orientation of the display is thereby precisely determined.

In subsequent block 34, the controller 6 performs a transformation of the output signal of filter 33 into the camera coordinate system and determines the desired camera field of view for display in accordance with the orientation of the display. The operation may include, in particular, a reference to a look-up table (mapping table) mapping the determined adjustment parameters of the display on the field of view of the camera, i.e. in the present embodiment the cropped portion of the overall captured camera image. In the given example, the output of the controller 6 is indicated by spherical coordinates $(\psi_v, \theta_v, \phi_v)$ of the camera-based coordinate system.

In the illustrated embodiment, a video DSP 35 receives the adjustment information output by the controller 6 and an image captured by wide-angle rear camera 3. Based on the received information, the video DSP adjusts an image portion corresponding to the field of view to be displayed on the display in accordance with the determined adjustment and renders the respective image portion to provide a video signal to be forwarded to rear view video display 5.

Fig. 4 shows an overall image that is taken by a fish eye rear camera mounted on a vehicle. Said image forms the basis for cropping portions thereof in order to perform the adjustment of the displayed image portions, in accordance with orientation adjustments of display 5, which will be described below with reference to Figs. 5 to 7.

Fig. 5 illustrates a cropped view that is shown on the display 3 in case of a display position and orientation corresponding to a starting point taken as a reference frame for determining the adjustment motions of the display (in the following also called: a "centered" display position).

The left-hand side of the figure shows the front portion of the vehicle interior with the display 3 being in the centered position. The right-hand side of the figure illustrates the corresponding cropped view. As can be seen therefrom, this is a centre portion of the uncropped image shown in Fig. 4, i.e. an image portion, wherein a certain portion of the overall image is missing (has been cropped) from each side of the overall image.

Fig. 6 illustrates a cropped view that is shown on the display 3 after the display has been moved out of the centered position shown in Fig. 5 by being turned around in a clockwise direction around an axis extending substantially vertically in the interior of the vehicle (Y-axis direction), as illustrated in the left-hand portion of the figure. As a result, on the right-hand side of the figure, the displayed cropped portion (displayed window) of the overall image of Fig. 4 has been shifted so as to provide an extended portion of the overall image on the right-hand side (in the illustrated example: actually the whole right-hand side portion of the image of Fig. 4), while the cropped off portion on the left-hand side has been extended (so that the leftmost vehicle seen in the rearmost portion of the image of Fig. 4 cannot be seen any more, and also a part of the next vehicle seen from the left is missing in the resulting image. On the other hand, the cropped portion in the vertical extension of the image remains unchanged. As will be readily appreciated by a skilled person, this is the same effect that would be achieved by a respective turning around of a conventional mirror arranged close to a central portion of the windshield of a vehicle.

Finally, Fig. 7 illustrates the further effect that is achieved by additionally turning the display 5 around an axis extending substantially horizontally in the interior of the vehicle (X-axis direction), starting from the orientation arrangement of Fig. 6, as illustrated in the left-hand portion of the figure. As a consequence, an upper portion of the image of Fig. 6 is further cropped off, and a respective portion (of the surface of the parking site) is added in the lower portion. On the other hand, the extension of the cropped image in the right to left direction in Fig. 7 remains the same as in Fig. 6.

The present invention relates to a rear view monitoring device for a vehicle replacing a conventional optical rear view mirror with a camera-based system. Instead of the conventional mirror, a display is provided which is fed by a video signal from a rear camera. In accordance with the present invention, the camera field of view of a displayed image can be adjusted by adjusting the orientation of the display replacing the conventional mirror, in the same manner as this is done when a driver adjusts a conventional mirror. For precisely detecting the manual adjustment of the display, such as by the driver, two motion or inertial sensors are provided and arranged so that the difference between the respective detection signals corresponds to the motion of the display with respect to the vehicle body. In preferred embodiments, and the adjustment of the camera field of view is performed by cropping an overall camera image captured by a wide-angle camera (such as a camera with a "fisheye" lens).

**Claims**

1. A rear view device for a vehicle (1), the rear view device comprising:

   a display (5) for displaying an image captured by a camera (3) mounted at a rear position of the vehicle (1), the display (5) being arranged so as to be mounted in the field of view of a driver of the vehicle (1) and so that a spatial orientation of the display (5) relative to a body of the vehicle (1) is adjustable in at least one dimension,
   a first sensor (S1) to be mounted fixed relative to the body of the vehicle (1), for detecting a movement of the vehicle (1),
   a second sensor (S2) to be mounted fixed relative to the display (5) for detecting a movement of the display (5) together with the vehicle (1),
   a controller (6) for determining the orientation of the display (5) on the basis of an output of the first sensor (S1) and an output of the second sensor (S2), and for setting a camera field of view (2) of an image to be displayed on said display (5) captured by said camera (3), in accordance with the determined orientation of the display (5).

2. A rear view device according to claim 1, wherein said display (5) is adapted to be arranged in place of a conventional rear view mirror of the vehicle (1).

3. A rear view device according to claim 2, wherein the camera field of view (2) is set by the controller (6) so as to correspond to the field of view offered to a driver of the vehicle (1) by a conventional mirror mounted in place of the display (5) and having the same spatial orientation as the display (5).

4. A rear view device according to claim 2 or 3, wherein the display (5) is integrated in a conventional mirror, and
   a view of an image on the display (5) is switchable between a camera image view and a conventional mirror image view.

5. A rear view device according to any of claims 1 to 4, wherein said controller (6) includes a filter arrangement (33) is adapted to subtract a sensor signal received from said second sensor (S2) from a sensor signal received from said first sensor (S1).

6. A rear view device according to any of claims 1 to 5, wherein said controller (6) sets said camera field of view (2) by instructing a video processor (35) to crop an image captured by said camera (3).

7. A rear view device according to any of claims 1 to 5, wherein said controller (6) sets the camera field of view (2) by instructing a physical movement of the camera (3) so as to modify the camera orientation.

8. A rear view device according to any of claims 1 to 7, wherein said controller (6) sets the camera field of view on the basis of a pre-stored mapping table mapping an orientation of said display (5) determined based on the output of the first and second sensors (S1, S2) on a camera field of view (2) to be set in accordance with said orientation of the display (5).

9. A rear view device according to any of claims 1 to 7, wherein said controller (6) sets the camera field of view (2) by performing a calculation on the basis of a pre-stored functional dependency between a parameter set characterizing the camera field of view (2) and a parameter set characterizing the orientation of the display (5).

10. A rear view system for a vehicle, said rear view system comprising a rear view device according to any of claims 1 to 9, and the camera (3) mounted at the rear position of the vehicle (1).

11. A system according to claim 10, wherein the camera (3) is mounted so as to have an adjustable orientation to be adjusted under the control of said controller (6).

12. A system according to claim 10, wherein said camera (3) is a wide angle camera.

13. A system according to any of claims 10 to 12, further comprising a video digital signal processor (35) for providing a video signal of an image corresponding to the camera field of view (2) set by said controller (6) to said display (5) for being displayed.

14. A vehicle comprising a rear view system according to any of claims 10 to 13.

15. A method of operating a rear view device for a vehicle (1), the rear view device comprising a display (5) for displaying an image captured by a camera (3) mounted at a rear position of the vehicle (1), the display (5) being mounted in the field of view of a driver of the vehicle (1), and a controller (6), the method comprising the steps of adjusting a spatial orientation of the display (5) relative to a body of the vehicle (1), in at least one dimension, detecting a movement of the vehicle (1), by a first sensor (S1), detecting a movement of the display (5) together with the vehicle (1), by a second sensor (S2), automatically determining, by said controller (6), the orientation of the display (5) on the basis of an output of the first sensor (S1) and an output of the second sensor (S2), setting, by said controller (6), a camera field of view (2) of an image to be displayed on said display (5) captured by said camera (3), in accordance with the determined orientation of the display (5), and displaying an image captured by the camera (3) and corresponding to the set camera field of view (2), on said display (5).

**Patentansprüche**

1. Rückansichtseinrichtung für ein Fahrzeug (1), wobei die Rückansichtseinrichtung umfasst:

ein Display (5) zum Anzeigen eines von einer an einer rückwärtigen Position des Fahrzeugs (1) angebrachten Kamera (3) aufgenommenen Bildes, wobei das Display (5) so angebracht ist, dass es in dem Sichtfeld eines Fahrers des Fahrzeugs (1) anzubringen ist und so dass eine räumliche Orientierung des Fahrzeugs (5) bezüglich einer Karosserie des Fahrzeugs (1) in wenigstens einer Dimension einstellbar ist, einen ersten Sensor (S1), bezüglich der Karosserie des Fahrzeugs (1) fixiert anzubringen, zum Erfassen einer Bewegung des Fahrzeugs (1), einen zweiten Sensor (S2), bezüglich des Displays (5) fixiert anzubringen, zum Erfassen einer Bewegung des Displays (5) zusammen mit dem Fahrzeug (1), einen Controller (6) zum Bestimmen der Orientierung des Displays (5) auf der Basis einer Ausgabe des ersten Sensors (S1) und einer Ausgabe des zweiten Sensors (S2) und zum Festsetzen eines Kamerasichtfeldes (2) eines von der Kamera (3) aufgenommenen, auf dem Display (5) anzuzeigenden Bildes gemäß der bestimmten Orientierung des Displays (5).

2. Rückansichtseinrichtung nach Anspruch 1, wobei das Display (5) angepasst ist, anstelle eines herkömmlichen Rückspiegels des Fahrzeugs (1) angeordnet zu werden.

3. Rückansichtseinrichtung nach Anspruch 2, wobei das Kamerasichtfeld (2) durch den Controller (6) so festgesetzt wird, dass es dem einem Fahrer des Fahrzeugs (1) durch einen herkömmlichen, anstelle des Displays (5) angebrachten Spiegel mit der gleichen Orientierung wie das Display (5) angebotenen Sichtfeld entspricht.

4. Rückansichtseinrichtung nach Anspruch 2 oder 3, wobei das Display (5) in einen herkömmlichen Spiegel integriert ist und eine Ansicht eines Bildes auf dem Display (5) umschaltbar ist zwischen einer Kamerabildansicht und einer herkömmlichen Spiegelbildansicht.

5. Rückansichtseinrichtung nach einem der Ansprüche 1 bis 4, wobei der Controller (6) eine Filteranordnung (33) enthält, eingerichtet ist zum Subtrahieren eines von dem zweiten Sensor (S2) empfangenen Sensorsignals von einem von dem ersten Sensor (S1) empfangenen Sensorsignal.

6. Rückansichtseinrichtung nach einem der Ansprüche 1 bis 5, wobei der Controller (6) das Kamerasichtfeld (2) festsetzt, indem er einen Videoprozessor (35) anweist, ein durch die Kamera (3) aufgenommenes Bild zu beschneiden.

7. Rückansichtseinrichtung nach einem der Ansprüche 1 bis 5, wobei der Controller (6) das Kamerasichtfeld (2) festsetzt, indem er eine körperliche Bewegung der Kamera (3) anweist, um die Kameraorientierung zu modifizieren.

8. Rückansichtseinrichtung nach einem der Ansprüche 1 bis 7, wobei der Controller (6) das Kamerasichtfeld auf der Basis einer vorgespeicherten Zuordnungstabelle, die eine beruhend auf der Ausgabe des ersten und zweiten Sensors (S1, S2) bestimmte Orientierung des Displays (5) einem gemäß der Orientierung des Displays (5) festzusetzenden Kamerasichtfeld (2) zuordnet, festsetzt.

9. Rückansichtseinrichtung nach einem der Ansprüche 1 bis 7, wobei der Controller (6) das Kamerasichtfeld (2) festsetzt, indem er eine Berechnung beruhend auf einer vorgespeicherten funktionellen Abhängigkeit zwischen einem Parametersatz, der das Kamerasichtfeld (2) kennzeichnet und einem Parametersatz, der die Orientierung des Displays (5) kennzeichnet, ausführt.

10. Rückansichtssystem für ein Fahrzeug, wobei das Rückansichtssystem umfasst
eine Rückansichtseinrichtung nach einem der Ansprüche 1 bis 9 und
die an der rückwärtigen Position des Fahrzeugs (1) angebrachte Kamera (3).

11. System nach Anspruch 10, wobei die Kamera (3) so angebracht ist, dass sie eine einstellbare Orientierung hat, die unter der Steuerung des Controllers (6) einzustellen ist.

12. System nach Anspruch 10, wobei die Kamera (3) eine Weitwinkelkamera ist.

13. System nach einem der Ansprüche 10 bis 12, weiterhin umfassend einen digitalen Videosignalprozessor (35) zum Bereitstellen eines Videosignals eines Bildes, welches dem durch den Controller (6) festgesetzten Kamerasichtfeld (2) entspricht, an das Display (5) zur Anzeige.

14. Fahrzeug, umfassend ein Rückansichtssystem nach einem der Ansprüche 10 bis 13.

15. Verfahren zum Betreiben einer Rückansichtseinrichtung für ein Fahrzeug (1), wobei die Rückansichtseinrichtung ein Display (5) zum Anzeigen eines von einer an einer rückwärtigen Position des Fahrzeugs (1) angebrachten Kamera (3) aufgenommenen Bildes, wobei das Display (5) in dem Sichtfeld eines Fahrers des Fahrzeugs (1) angebracht ist, und einen Controller (6) umfasst, wobei das Verfahren die Schritte umfasst:

Einstellen einer räumlichen Orientierung des Displays (5) bezüglich einer Karosserie des Fahrzeugs (1) in wenigstens einer Dimension,
Erfassen einer Bewegung des Fahrzeugs (1) durch einen ersten Sensor (S1),
Erfassen einer Bewegung des Displays (5) zusammen mit dem Fahrzeug (1) durch einen zweiten Sensor (S2),
automatisches Bestimmen, durch den Controller (6), der Orientierung des Displays (5) auf der Basis einer Ausgabe des ersten Sensors (S1) und einer Ausgabe des zweiten Sensors (S2),
Festsetzen, durch den Controller (6), eines Kamerasichtfeldes (2) eines durch die Kamera (3) aufgenommenen, auf dem Display (5) anzuzeigenden Bildes gemäß der bestimmten Orientierung des Displays (5) und
Anzeigen eines durch die Kamera (3) aufgenommenen und dem festgesetzten Kamerasichtfeld (2) entsprechenden Bildes auf dem Display (5).

**Revendications**

1. Dispositif de rétrovision pour un véhicule (1), le dispositif de rétrovision comprenant :

un affichage (5) pour afficher une image capturée par une caméra (3) montée au niveau d'une position arrière du véhicule (1), l'affichage (5) étant agencé de façon à être monté dans le champ de vision d'un conducteur du véhicule (1) et de sorte qu'une orientation spatiale de l'affichage (5) par rapport à une carrosserie du véhicule (1) soit ajustable dans au moins une dimension,
un premier capteur (S1) destiné à être monté de manière fixe par rapport à la carrosserie du véhicule (1), pour détecter un mouvement du véhicule (1),

un second capteur (S2) destiné à être monté de manière fixe par rapport à l'affichage (5) pour détecter un mouvement de l'affichage (5) ensemble avec le véhicule (1), une commande (6) pour déterminer l'orientation de l'affichage (5) sur la base d'une sortie du premier capteur (S1) et d'une sortie du second capteur (S2), et pour régler un champ de vision de caméra (2) d'une image à afficher sur ledit affichage (5), capturée par ladite caméra (3), conformément à l'orientation déterminée de l'affichage (5).

2. Dispositif de rétrovision selon la revendication 1, dans lequel ledit affichage (5) est adapté pour être agencé à la place d'un rétroviseur habituel du véhicule (1).

3. Dispositif de rétrovision selon la revendication 2, dans lequel le champ de vision de caméra (2) est réglé par la commande (6) de manière à correspondre au champ de vision offert à un conducteur du véhicule (1) par un miroir habituel monté à la place de l'affichage (5) et ayant la même orientation spatiale que l'affichage (5).

4. Dispositif de rétrovision selon la revendication 2 ou 3, dans lequel l'affichage (5) est intégré dans un miroir conventionnel, et
une vue d'une image sur l'affichage (5) est commutable entre une vue d'image de caméra et une vue d'image de miroir habituel.

5. Dispositif de rétrovision selon l'une quelconque des revendications 1 à 4, dans lequel ladite commande (6) comprend un agencement de filtre (33) adapté pour soustraire un signal de capteur reçu dudit second capteur (S2) à partir d'un signal de capteur reçu dudit premier capteur (S1).

6. Dispositif de rétrovision selon l'une quelconque des revendications 1 à 5, dans lequel ladite commande (6) règle ledit champ de vision de caméra (2) en ordonnant à un processeur vidéo (35) de recadrer une image capturée par ladite caméra (3).

7. Dispositif de rétrovision selon l'une quelconque des revendications 1 à 5, dans lequel ladite commande (6) règle le champ de vision de caméra (2) en ordonnant un mouvement physique de la caméra (3) de manière à modifier l'orientation de caméra.

8. Dispositif de rétrovision selon l'une quelconque des revendications 1 à 7, dans lequel ladite commande (6) règle le champ de vision de caméra sur la base d'une table de cartographie préenregistrée cartographiant une orientation dudit affichage (5) déterminée sur la base de la sortie des premier et second capteurs (S1, S2) sur un champ de vision de caméra (2) devant être réglé selon ladite orientation de l'affichage (5).

9. Dispositif de rétrovision selon l'une quelconque des revendications 1 à 7, dans lequel ladite commande (6) règle le champ de vision de caméra (2) en effectuant un calcul sur la base d'une dépendance fonctionnelle pré-mémorisée entre un ensemble de paramètres caractérisant le champ de vision de caméra (2) et un ensemble de paramètres caractérisant l'orientation de l'affichage (5).

10. Système de rétrovision pour un véhicule, ledit système de rétrovision comprenant un dispositif de rétrovision selon l'une quelconque des revendications 1 à 9, et
la caméra (3) montée à l'arrière du véhicule (1).

11. Système selon la revendication 10, dans lequel la caméra (3) est montée de manière à avoir une orientation ajustable devant être ajustée sous la commande de ladite commande (6).

12. Système selon la revendication 10, dans lequel ladite caméra (3) est une caméra grand angle.

13. Système selon l'une quelconque des revendications 10 à 12, comprenant en outre un processeur de signal numérique vidéo (35) pour fournir un signal vidéo d'une image correspondant au champ de vision de caméra (2) réglé par ladite (6) audit affichage (5) pour qu'il soit affiché.

14. Véhicule comprenant un système de rétrovision selon l'une quelconque des revendications 10 à 13.

15. Procédé de fonctionnement d'un dispositif de rétrovision pour un véhicule (1), le dispositif de rétrovision comprenant un affichage (5) pour afficher une image capturée par une caméra (3) montée au niveau d'une position arrière du véhicule (1), l'affichage (5) étant monté dans le champ de vision d'un conducteur du véhicule (1), et une commande (6), le procédé comprenant les étapes consistant à :

ajuster une orientation spatiale de l'affichage (5) par rapport à une carrosserie du véhicule (1), dans au moins une dimension,
détecter un mouvement du véhicule (1), par un premier capteur (S1),
détecter un mouvement de l'affichage (5) conjointement avec le véhicule (1), par un second capteur (S2),
déterminer automatiquement, par ladite commande (6), l'orientation de l'affichage (5) sur la base d'une sortie du premier capteur (S1) et d'une sortie du second capteur (S2), régler, par ladite commande (6), un champ de vision de caméra (2) d'une image à afficher sur ledit affichage (5) capturée par ladite caméra (3), selon l'orientation déterminée de l'affichage (5), et afficher une image capturée par la caméra (3) et correspondant au champ de vision de caméra réglé (2), sur ledit affichage (5).

FIG. 1A

FIG. 1B

FIG. 2

Fig. 3

Fig. 4

GRÜNECKER
PATENT- UND RECHTSANWÄLTE

EP103863

Fig. 5

Fig. 6

Fig. 7

GRÜNECKER
PATENT- UND RECHTSANWÄLTE

EP103863

**EP 3 184 364 B1**

**REFERENCES CITED IN THE DESCRIPTION**

**Patent documents cited in the description**

- DE 102012223479 A1
- JP 2009100180 A